# EUROPEAN PATENT APPLICATION

(11) **EP 1 162 222 A2**
(43) Date of publication of application: **12.12.2001**
(21) Application number: 01112197.7
(22) Date of filing: 18.05.2001
(51) Int. Cl.: C08G 18/64, C08G 18/66, C08G 18/75

(54) **Biodegradable foams based on renewable resources**

(30) Priority: 08.06.2000 US 590413
(71) Applicant: Smithers-Oasis Company, Cuyahoga Falls, OH 44221 (US)
(72) Inventor: Kelly, Paul T., Cleveland Heights, Ohio 44106 (US); Frisch, Kurt C., Grosse ILE, Michigan 48138 (US); Sendijarevic, Vahid, Troy, Michigan 48098 (US)
(74) Representative: Fischer, Wolf-Dieter, Dipl.-Ing.

(57) **Abstract**

The present invention is directed to a low index polyurethane foam that is at least partially biodegradable comprising the reaction product of from about 10 to about 35 percent by weight of an isocyanate; from about 90 to about 65 percent by weight of an active hydrogen containing component selected from the group consisting of from about 80 to about 100 percent by weight of a component derived from a natural, renewable component and from about 0 to about 20 percent by weight of a component derived from a petrochemical source to total 100 percent by weight of active hydrogen containing component; from about 0.5 to about 1 percent by weight of a catalyst from about 0.3 to about 3 percent by weight of a surfactant; and from about 0.5 to about 20 percent by weight of a blowing agent.

## Description

### TECHNICAL FIELD

The present invention relates generally to rigid and semi-rigid foams. More particularly, the present invention relates to rigid foams that are at least partially biodegradable. Specifically, the present invention is directed to rigid polyurethane foam that at least partially biodegrades into non-toxic compounds. The foams are prepared from modified or unmodified renewable raw materials which provide the entire or at least part of the polyol system. Rigid polyurethane foams of the present invention can be made to absorb water rapidly and accordingly, find use as floral supports, and growing media as well as a variety of other non-related applications. While rigid foams are useful, the technology is also applicable to the manufacture of semi-rigid or flexible foams.

### BACKGROUND OF THE INVENTION

Heretofore, rigid urethane and phenolic foams have been produced primarily from non-renewable petrochemical resources. These include di- or poly- isocyanates and polyether or polyester polyols that are also derived from petrochemicals. Recently, polyols produced from chemical modifications to natural raw materials have been utilized in polyurethane foams, such as sucrose based polyols.

The problem with foams that are produced from petrochemical resources is that they are not biodegradable. The flowers biodegrade, but not the foam. In disposing of the entire arrangement, time and labor are needed to separate the foam from the flowers.

Typically, it is desirable that the flowers be composted to reduce the loading in landfills and to provide fertilizer. Also, there are increasing requirements that entire floral arrangements be 100% compostible. For example in Europe, cemeteries are requiring that all plastic materials left on the grounds be 100% compostible. Rigid foams that are derived primarily from petrochemical resources are not biodegradable or compostible.

Compostibility and biodegradability are generally measured by the rate of oxygen consumption during compostibility or biodegradability screening tests. Other tests may also be employed, for example optical clarity or density screening tests, to determine compostibility and biodegradability of materials.

There have been discovered some biodegradable thermoplastic materials, including those based on polylactic acid, such as ECO-PLA™ from Cargill® or HEPLON™ from Chronopol® and polyesters such as ECOFLEX polyester from BASF and EASTAR BIO polyester from Eastman. However, biodegradable thermoset materials are not widely available. Flexible polyurethane foams using molasses are reported to be biodegradable. But, rigid biodegradable foams, up to this point, have not been reported. Generally, as crosslink density increases, biodegradability decreases. In addition, increasing the isocyanate content tends to decrease biodegradability.

Rigid foams have been used in many applications. Such applications can include rigid supports for floral arrangements. In these, a block of foam is placed in the bottom of a container, such as a vase. Cut flowers are then inserted into the foam, and the foam then supports the flowers. Water is added to the foam to provide water to the cut flowers to prolong their life. The foam can be treated with surfactants to increase the water retention of the foam, or more hydrophilic foams can be created to provide the increased water retention. Also, rigid foams can be used with silk or dried flower arrangements, as agricultural foams such as grower foams for root growth, and insulation foam.

During the early development of floral foams, phenol-formaldehyde resins were used to produce the foams. These foams required the addition of surfactants to retain water. Polyurethane foams were then developed as an alternate. Additionally, nutrients have been included with the foam to further prolong the life of the floral arrangement.

The main requirements for these foams as floral arrangements include fast saturation but low drainage of water and sufficient strength to support the flower stems in the arrangement, while providing sufficient brittleness or crispness to enable easy stem insertion. The water that is absorbed into the cellular structure must be freely available to the flower stems in order to sustain flower life.

These foams can also be used as a medium for growing plants. For these uses, the grower foams must typically have very fast water saturation times with high water drainage values. The foam strength must facilitate root penetration during growth, but must also support the growing plant during transplantation.

What is needed in the art is a floral foam that meets the performance requirements of current floral foams and has the added benefit of being biodegradable and/or compostible. Also, it would be desirable from an environmental perspective to be able to use natural, renewable components as at least partial replacements for petrochemically derived components. Additionally, it is desired that the foam be formed with environmentally friendly blowing agents. Finally, the foams should not produce or release any toxic components during use and subsequent biodegradation.

### SUMMARY OF THE INVENTION

It is therefore an object of the invention to provide a thermoset foam that is at least partially biodegradable and/or compostible.

It is another object of the invention to provide a foam for floral applications that is made with environmentally friendly blowing agents.

It is yet another object of the present invention to provide a polyurethane foam that has physical properties including rigidity, crispness, density, and hydrophilicity for floral use and which is biodegradable.

It is yet another object of the present invention to provide a polyurethane foam that can be made semi-rigid or flexible.

It is yet another object of the present invention to provide a polyurethane foam that does not produce or release any toxic components during use and subsequent biodegradation.

It is yet another object of the present invention to provide a polyurethane foam that is produced with modified or unmodified, renewable raw components containing hydroxyl groups which provide the entire or at least part of the polyol system, in at least partial replacement for petrochemical components.

The present invention is directed to a low index polyurethane foam that is at least partially biodegradable comprising the reaction product of from about 10 to about 35 percent by weight of an isocyanate; from about 90 to about 65 percent by weight of an active hydrogen containing component selected from the group consisting of from about 80 to about 100 percent by weight of a component derived from a natural, renewable component and from about 0 to about 20 percent by weight of a component derived from a petrochemical source to total 100 percent by weight of active hydrogen containing component; from about 0.5 to about 1 percent by weight of a catalyst; from about 0.3 to about 3 percent by weight of a surfactant and from about 0.5 to about 20 percent by weight of a blowing agent.

### BRIEF DESCRIPTION OF THE DRAWINGS

Fig. 1 is a graph plotting oxygen consumption versus the time in days for two examples according to the present invention;
Fig. 2 is a graph plotting percent biodegradation versus time in days for one example according to the present invention against a cellulose control in a composting test, according to ASTM D 5338; and
Fig. 3 is another graph depicting oxygen consumption versus incubation in days for three examples according to the present invention.

### DETAILED DESCRIPTION OF THE INVENTION

According to the present invention, a thermoset foam can be made that is at least partially biodegradable. It can be made fully biodegradable, or some components that are not biodegradable can be included with the foam. Foams of the present invention may be low index foams, that is, foams which have a low isocyanate content. As isocyanate content is increased, namely, at about 35 percent by weight, the foam product becomes rigid and, as isocyanate content is decreased, namely, at about 10 percent by weight, the foam product becomes flexible. Isocyanate index can be measured by titration with phenyl isocyanate, according to the following procedure which is described in DIE ANGEWANDTE MAKROMOLECULARE CHEMIE,(1990) 87-89 (Nr. 2961), the subject matter of which is incorporated herein by reference.

The compound to be determined is placed into a dried 50 ml ground-pointed flask in a quantity containing 0.4-0.5 mmol OH groups and dissolved in 0.5-1 ml of dried dioxane. The flask is flushed with dry nitrogen, and 100 *µ*l phenylisocyante and 10 *µ*l 0.01 mol/l dibutyltindilaurate in dioxane are added. After 2 hours at 60°C, 200 *µ*l dibutylamine is added, and the mixture is reacted at room temperature for 2 hours. On dilution with 5 ml of a dioxan-isopropyl alcohol mixture (5:3), the solution is titrated with 0.5 mol/l HCI in isopropyl alcohol using an automatic titrator (Radiometer TTT 60, Denmark).

As noted hereinabove, the foam is formed from an isocyanate, one or more active hydrogen containing components (e.g., polyols), at least one of which is a renewable, natural material; a catalyst, a surfactant, and a blowing agent. The foam can be made by a continuous process, or by a batch mold process and is compostible. For floral purposes, the compostible polyurethane foams of the present invention must meet certain density, dimensional stability, stem holding, and other mechanical requirements for floral foams. The density should be between 15 to 35 Kg/m³, preferably between 18 to 25 Kg/m³, and the compressive strength between 5 to 13.8 KPa (8 to 20 p.s.i.) and preferably 6.9 to 10.4 KPa (10 to 15 psi), depending on flower stem types. The foam should be dimensionally stable and crisp (insertion of a flower stem or a pen must give a clean cut with no tearing or bending of the foam), and the foam must be compatible with cut flowers, that is, sustain life for at least 3 to 4 days. In addition, the foam should absorb water in a few minutes with a minimum of drainage (less than 3%).

For other foam applications *i.e*., non-floral, density, compressive strength and other properties can be controlled depending upon the performance and properties that are required without varying the concepts of the present invention.

Isocyanates that can be used in this invention include all aromatic isocyanates including toluene diisocyanate, their isomers and blends of isomers; methylene bis(phenyl isocyanate) (MDI) and its isomers and blends of isomers; poly(methylene) poly(phenyl) poly(isocyanate); polymeric MDI where the isocyanate functionality ranges from 2.1 to 3; modified MDI such as carbodiimide-modified; quasi-prepolymers of MDI; paraphenylene diisocyanate (PPDI); 1,5-naphthalene diisocyanate, and mixtures thereof. Aliphatic and cycloaliphatic isocyanates such as hexamethylene diisocyanate (HDI), biuret adduct of HDI (such as DESMODUR® N100 from Bayer AG), isophorone diisocyanate (IPDI), hydrogenated MDI (H12MDI) (such as DESMODUR® W from Bayer AG), and mixtures thereof can also be employed. Also included are adducts of diisocyanates with trimethylolpropane (TMP) such as adducts with toluene diisocyanate (TDI). Also included are natural raw material-based diisocyanates such as lysine diesterisocyanate and tall oil based isocyanates, such as dimerized fatty acid backbone aliphatic isocyanate, supplied as DDI diisocyanate from Henkel AG. In general, any isocyanate that can form polyurethane foams can be employed.

Active hydrogen containing components of the present invention include petrochemical based polyols, petrochemical based amines and natural, renewable components. Petrochemical based polyols, i.e., synthetic materials that can be used in the present invention, include ethylene glycol; triethylene glycol; glycerol; trimethylolpropane; dipropylene glycol; 1,4-butanediol; 1,3-propanediol; hydroxyl terminated polyesters based on dibasic acids with carbon atoms ranging from C₄ to C₁₂, polycaprolactones and hydroxyl terminated polycarbonates. The polyesters can be branched by introduction of a trifunctional polyol such as glycerol, trimethylolpropane or 1,2,6-hexanetriol. Other petrochemical based polyols include hydroxyl terminated polyethers such as poly(oxyethylene) glycols and polyols, poly(oxypropylene) glycols and polyols, poly(oxyethylene)(oxypropylene) glycols and polyols, either in the form of block or random copolymers, poly(oxybutylene) glycols and polyols, in molecular weights ranging from about 400 to about 6500 either alone or in combination with other glycols or polyols. Also included are poly(oxyethylene), poly(oxyethylene) (oxypropylene) and poly(oxypropylene) polyols based on base polyols such as glycerol, pentaerythrytol, sorbitol, mannitol, sucrose, glucose and other mono-, di- and poly-saccharides including starch, cellulose and polyols based on mercaptans. Other polyols include C₁ to C₆ alkanolamines and polyoxyalkylene derivatives thereof. Other polyols include polyoxyalkylene derivatives of diamines and alkanolamines such as ethylene diamine, triethanolamine, or toluene diamine. Hindered aromatic diamines having the formula 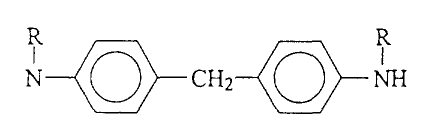 wherein R is C₄ to C₈ can also be employed. Chain extenders or crosslinkers can be used such as ethylene glycol, diethylene glycol, triethylene glycol, glycerol, trimethylolpropane, propylene glycol and dipropylene glycol, 1,4-butane diol, or 1,3-propane diol.

In order to render the foam biodegradable, the present invention is directed toward the use of a component derived from a natural, renewable component which is, in turn, selected from the group consisting of a) mono-, di- and polysaccharides; b) hydroxyl-containing fatty oils having from about 12 to about 32 carbon atoms; c) renewable modified and unmodified natural additives and, mixtures of a, b and c. These components are basically natural products from renewable resources. Exemplary mono-, di- and polysaccharides; include natural mixtures of polysaccharides, molasses, corn syrup and the like. Exemplary hydroxyl-containing fatty oils include castor oil, modified castor oil, trans-esterified products of oils and the like. Exemplary renewable modified and unmodified natural additives include proteins, amino acids and amino acid derivatives, cellulose and cellulose derivatives, rosin, tall oil, starch and starch derivatives and the like. These natural materials comprise from about 50 to 100 percent by weight of the total active hydrogen containing component, the remainder (0 to 50 percent by weight) comprising a synthetic polyol or other active hydrogen containing component when one is present with the natural material. Mixtures of more than one natural material can be employed and combined with one or more synthetic materials, i.e., active hydrogen containing components.

The total parts (by weight) of active hydrogen containing component in the polyurethane foam range from about 90 to about 50 parts by weight with a preferred range of from about 80 to about 60. The total parts by weight of isocyanate in the polyurethane foam range from about 10 to about 50 parts by weight with a preferred range of from about 20 to about 40 parts by weight.

Other natural products that can be used in the composition as reactive additives or fillers include peat moss, wood fibers, ground agricultural or horticultural refuse, general scrap polyurethane foam and the like. Amounts of such other natural products range from about 0 to about 20 parts by weight. Additives for improved performance of the final product may also be added, for example, plant growth hormones, pH control agents, biocides or other additives for longer flower life in floral foams, or plant nutrients in grower foams. For industrial applications, other additives would be employed depending upon the results desired, for instance, antistatic agents, electrical conductors or the like where electrical properties were of interest and so forth. Amounts of such additives range from 0 to about 20 percent by weight, in either instance, floral or industrial.

In order to produce the foam and for the resultant foam to be hydrophilic, surfactants are employed. Surfactants that can be used in the invention include cell regulators for foam structure control, cell openers for open cell foam, and surfactants to enhance water uptake by open celled foams. Typical cell regulators include silicone-containing surfactants consisting of copolymers of polyalkylene glycols and polysiloxanes and non-silicone containing surfactants such as LK-221 and LK-443 supplied by Air Products Co. The surfactant concentration typically varies from about 0.3 to about 3 percent by weight, preferably from about 0.5 to about two percent by weight.

Cell openers such as the proprietary organic polymer, sold under the trademark ORTEGOL® 501 from Goldschmidt, or other types such as zinc stearate can also be used in the invention to produce open cell foam.

Other surfactants that can be used to enhance water absorption and absorption rates while controlling drainage include anionic and nonionic surfactants. However, cationic and amphoteric surfactants can also be used. The following examples are merely illustrative and not meant to be all inclusive. Nonionics such as block copolymers of poly(oxyethylene), poly(oxypropylene) glycols or other poly(alkylene) block copolymers such as those sold under the trademark PLURONIC® from BASF, or random copolymers such as those sold under the trademark UCON® from Union Carbide can be employed. Other examples of nonionics include derivatives of fatty acids such as from sorbitan, including the products sold under the trademarks TWEEN® and SPAN® from ICI. Examples of anionic surfactants, include salts of substituted or nonsubstituted alkyl aryl sulfonic acids, sulfosuccinates such as those sold under the trademark AEROSOL® from Cytec. Examples of amphoteric surfactants include imidazolines and imidazoline derivatives such those sold under the MIRANOL® trademark from Rhone Poulenc.

Blowing agents that can be used in the invention include CO₂, generated either by reaction of water with isocyanate or by introduction of liquid CO₂, auxiliary blowing agents such as methylene chloride, hydrochlorofluorocarbons such as HCFC 141b and hydrofluorocarbons such as HFC 134a and HFC245fa. Other suitable blowing agents include hydrocarbons such as pentanes (iso, normal, cyclo- and mixtures thereof). In addition, certain azeotrope mixtures can be used as blowing agents. When one or more blowing agents are employed, they are added in amounts of from about 0.5 to 20 parts by weight, with 10 to 20 parts by weight being preferred.

Suitable catalysts that may be used in the invention include organometallic catalysts such as dibutyltin dilaurate, alternately bismuth catalysts or combination of organo- zinc and bismuth catalysts, tertiary amine catalysts such as DABCO® 33LV (Air Products), NIAX A-1 (Witco), DABCO® TMEDA (Air Products), or DABCO® TMBDA (Air Products). In addition, trimerization catalysts can be used, for example quaternary ammonium carboxylates such as DABCO® TMR-2, DABCO® TMR-3, and DABCO® TMR-4 (Air Products). Sodium or potassium octoate and potassium acetate, 2,4,6-tris (dimethylaminopropyl) hexahydrotriazine (POLYCAT® 41 from Air Products), 2,4,6-tris (dimethylamino phenol) (DABCO® 30 from Air Products) alone or in combination with potassium octoate or potassium acetate may also be used. Catalyst ranges include broadly, from about 0.5 to 1 parts by weight and preferably, from about 0.5 to 0.75 parts by weight.

The rigid foams of the present invention can be used in applications such as, but not limited to, floral foam for fresh flower arrangements, floral foam for dried or silk flower arrangements, agricultural foams such as grower foams for root growth, and insulation foam in applications where significant microbial attack is not likely during the useful life of the product. In order to produce the polyurethane foams of the present invention, components are combined as follows: The surfactants, blowing agents and catalysts are added to the polyols along with all or a portion of any additives and blended together. The remainder of the additives are blended with the isocyanate(s). The mixture is then allowed to react in either an open or closed mold or on a foaming line.

The components are allowed to react exothermically and go through a reaction profile of cream time, rise time and tack free time to suit the manufacturing process. After the foaming is complete and the product has cooled, the foam is cut into various shapes as determined by the product application.

### SPECIFIC EMBODIMENTS OF THE INVENTION

In order to demonstrate practice of the present invention, a number of polyurethane foams have been presented hereinbelow. Compositions are provided and corresponding properties are illustrated in the corresponding Tables and drawing figures. In the examples which follow all amounts are given as parts by weight (pbw), all temperatures are Celsius and times are in seconds, unless otherwise noted.

Seven foams, Examples 1- 8 were prepared according to the formulations set forth in Table 1. The materials employed in the formulations exemplified hereinbelow are identified in Table 2.

All materials were used as received from the suppliers. Composting screening tests were carried out by at least one of three methods. These methods include i) an aqueous bacteria growth test via optical density and oxygen consumption measurements, ii) an oxygen consumption test in which microbes extracted from compost were used as the innoculum, and iii) ASTM D-5338 Controlled Composting Test, which is incorporated herein by reference. Oxygen consumption in the reaction vessels containing glucose and cellulose was used as a control in the composting screening test.

The biodegradability properties of the resulting films and foams were carried out in the Biology Department of the University of Detroit Mercy using bacteria growth as a function of time (incubation). Microorganisms were obtained from the American Type Culture Collection (ATCC). *Pseudomonas aeruginosa* strain ATCC 13388 was used for biodegradability screening because it was recommended by the American Society for Testing and Materials (ASTM-G22). Because this microorganism did not digest sucrose, *Serratia Marcescens* ATCC 13880 was substituted for testing sucrose containing foams. The film or foam to be tested served as the only carbon source for microorganisms. 40 mL of minimal medium, washed inoculum cells and about 1-1.5 g of film or foam were placed in 300 mL flasks and incubated on a shaker at 37°C. Flasks containing mixtures without foam served as a control. Culture growth was followed by the standard measurement of optical density (OD) on a Klett-Summerson Colorimeter. In cases where foams fragmented microbal growth was also assesses at the end of the experiment by standard colony count assay. For foams that were easily fragmented, culture growth was followed by measuring oxygen consumption on a HACH Corporatiom BOD Track machine.

The composting testing was carried out by O.W.S. Inc. - Organic Waste Systems in Dayton, Ohio in an arrangement with the Smithers Oasis Company. The Composting screening test was carried out by monitoring oxygen consumption by microbes extracted from a Hyponex potting mixture. Oxygen consumption in the reaction vessels containing glucose was used as a control in the composting screening test.

Density and Open Cell Content - The open cell content of the resulting foams was measured using a Beckmann pycnometer according to the ASTM D 2856 and density according to the ASTM 1622 procedure.

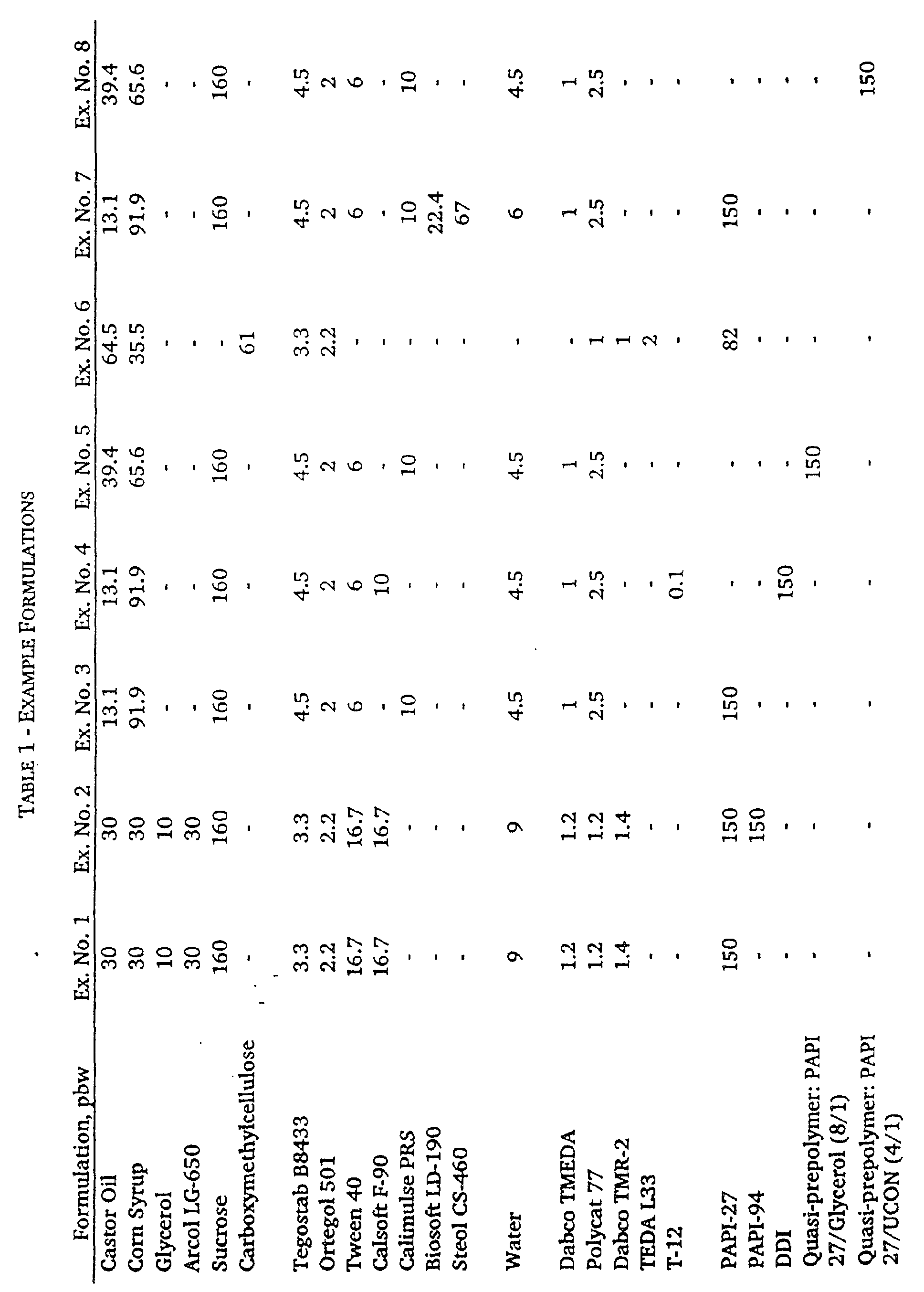

**TABLE 2**

| RAW MATERIALS | | |
|---|---|---|
| Designation | Composition | Source |
| ARCOL® LG-650 | Glycerol-propylene oxide polyether triol | Arco Chemicals |
| Biosoft LD-190 | Formulated detergent concentrate | Stepan Chemicals |
| CAUMULSE® PRS | Monoisopropylamine dodecylbenzene sulfonate | Pilot Chemical Co. |
| CALSOFT® F-90 | Sodium dodecylbenzene sulfonate | Pilot Chemical Co. |
| CASTOR OIL | Ricinus oil (eq. wt.=342) | CAS Chemicals |
| CORN SYRUP | Corn syrup (water content: 20-23 wt.%) | CPC International, Inc. |
| DABCO® T-12 | Catalyst - dibutyltin dilaurate | Air Products |
| DABCO® TMEDA | N,N,N',N'-tetramethyl-1,2-ethylenediamine | Air Products |
| DABCO® TMR-2 | N-(2-hydroxypropyl)-N-trimethylammonium formate | Air Products |
| DDI 1410 | Dimerized fatty acid backbone aliphatic isocyanate | Henkel Corp. |
| GLYCEROL | 2,3-dihydroxypropanol (eq. wt.=32.7) | Aldrich Chemical Co. |
| ORTEGOL® 501 | Cell opener | Goldschmidt |
| PAPI®-27 | Polymeric MDI, eq. wt.=134, f=2.7 | Dow Chemical Co. |
| PAPI®-94 | Polymeric MDI, eq. wt. = 131.5, f = 2.3 | Dow Chemical Co. |
| POLYCAT® 7 | Bis(dimethylaminopropyl) methylamine | Air Products, Inc. |
| Steol CS-460 | Sodium laurylether sulfate | Stepan Chemicals |
| Sucrose | Pioneer® sugar (fine granulated) | Michigan Sugar Co. |
| TEDA® L 33 | Triethylenediamine in dipropylene glycol | Tosoh USA Inc. |
| UCON® 75H-1400 | Copolymer of propylene oxide and ethylene oxide (eq. wt.=1,235) | Union Carbide |

The forming of the mixtures into foams was accomplished by standard methods known to those skilled in the art. Exemplary methods include, but are not limited to, the one shot process, and the three-stream machine solid-adds mixing process. For further information, reference can be made to U.S. Pat. No. 4,225,679 to Pilato or U.S. Pat. No. 4,119,757 to Hobson et al., which are incorporated herein by reference. The foams can be produced either continuously on a continuous foaming line, or discontinuously in a molding process.

The best composting and biodegradation results were obtained for the foam formulation of Ex. Nos. 1 and 2 which exhibited similar growth of bacteria (Serratia Marcescens) compared to 0.2% glucose solution and much better bacteria growth compared to the foams of Ex. No. 6 which was prepared from 100% natural polyols (castor oil and corn syrup) with carboxymethyl cellulose (CMC). Examples No. 1 and 2 were prepared using a mixture of natural polyols (castor oil, corn syrup, and glycerol) and a polyol produced from petrochemicals (Arcol LG-650).

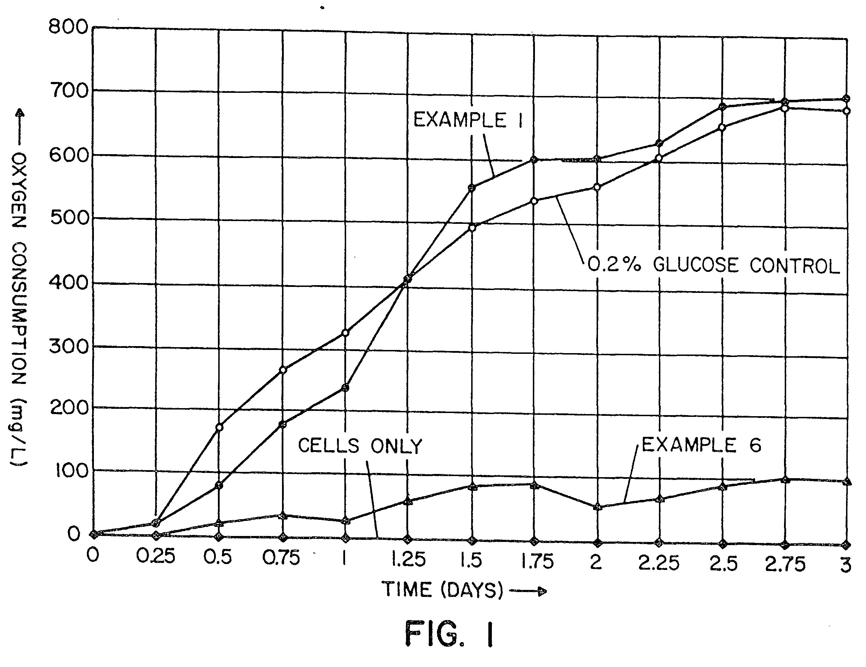

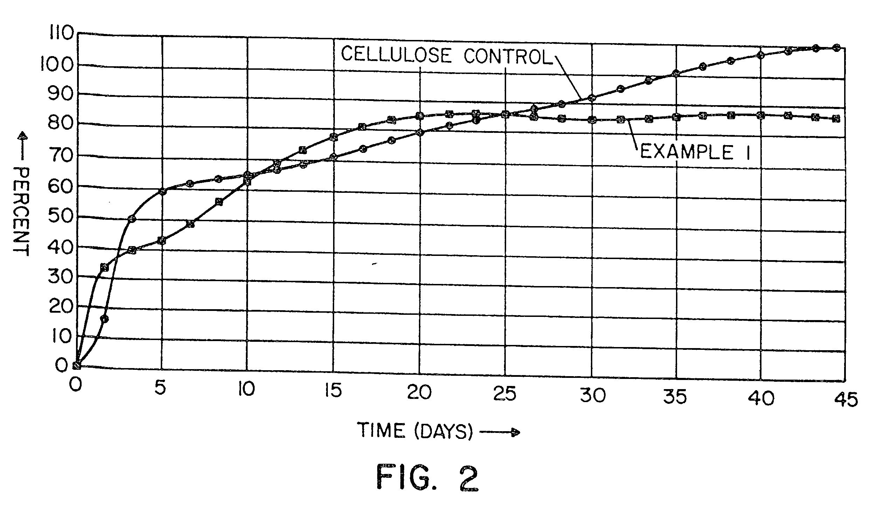

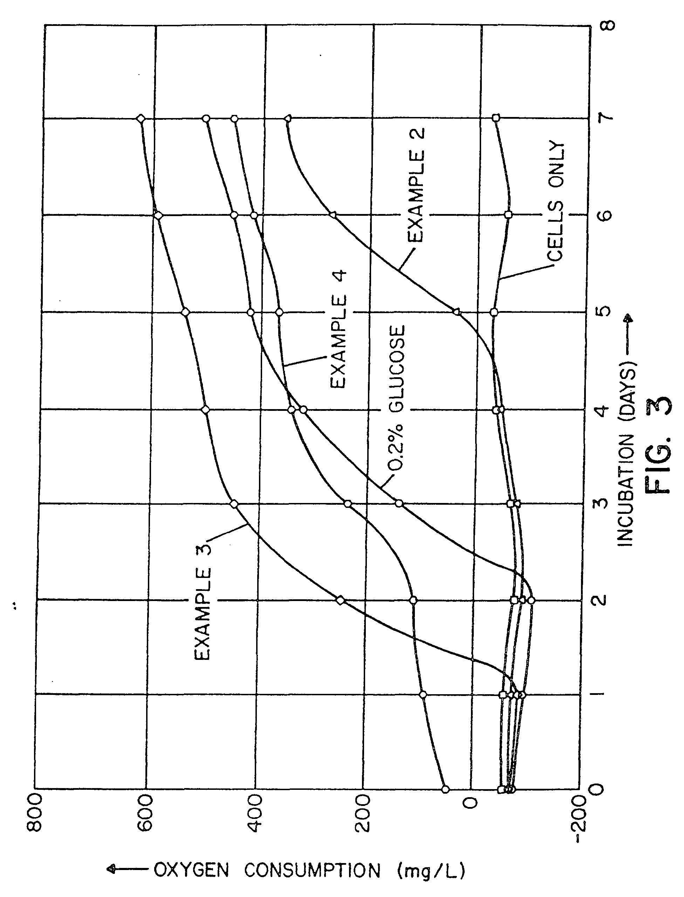

The results of the composting test as seen in Fig. 2 according to ASTM D5338-92 were in excellent agreement with the results from the bacteria growth as can be seen in Figs. 1 and 3. More importantly, compostibility of foam Ex. No.1 was similar to that of cellulose, which was used as a reference.

With reference to Fig. 3, foam examples 2, 3 and 4 were incubated with Hyponex microbes and from the relatively high oxygen consumption along the x-axis after incubation for seven days, it can be seen that these foams decomposed comparably to a 0.2% glucose sample. Empty reaction cells were also measured for standardization.

In order to determine the approximate amount of components which remained unreacted with isocyanate in foam No. 7, the concentration of active hydrogen reactive with isocyanate in the polyol system was determined by phenyl isocyanate titration as reported in Table 3 hereinbelow. The polyol system contained all components of the foam formulation No. 7 except the isocyanate. The equivalent weight of the polyol system in formulation No. 7 was found to be 150. The isocyanate index of the final foam calculated from the polyol system equivalent weight and amount of isocyanate was 55. This was an indication that approximately 45% of the total hydrogen reactive with isocyanate in the foam was free (unreacted).

**Table 3**

| DETERMINATION OF EQUIVALENT WEIGHT OF POLYOL SYSTEM^{a} OF FORMULATION NO. 6 BASED ON TOTAL HYDROGEN REACTIVE WITH ISOCYANATE | | | | |
|---|---|---|---|---|
| Designation | No. of measurements | Average eq. wt. | Minimum eq. wt. | Maximum eq. wt. |
| Initial | 4 | 150 ± 7 | 143 | 157 |
| After 18 hours | 6 | 149 ± 7 | 144 | 156 |

| | | | | |
|---|---|---|---|---|
| ^{a} A mixture of all components except isocyanate | | | | |

The foregoing descriptions of the exemplary embodiments of the invention have been presented for the purposes of illustration and description. They are not intended to be exhaustive or to limit the invention to the precise formulations disclosed. Obvious modifications or variations are possible in light of the above teachings. These embodiments were chosen and described to provide the best illustration of the principles of the invention and its practical application thereby to enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

Based upon the foregoing disclosure, it should now be apparent that the use of the natural, renewable polyols described herein will carry out the objects set forth hereinabove. It is, therefore, to be understood that any variations evident fall within the scope of the claimed invention and thus, the selection of specific component elements can be determined without departing from the spirit of the invention herein disclosed and described. Thus, the scope of the invention shall include all modifications and variations that may fall within the scope of the attached claims.

As should now be apparent, the present invention not only teaches a thermoset foam that is at least partially biodegradable and/or compostible, but also accomplishes the other objects of the invention.

## Claims

1. A low index polyurethane foam that is at least partially biodegradable and comprising the reaction product of:
from about 10 to about 35 percent by weight of an isocyanate;
from about 90 to about 65 percent by weight of an active hydrogen containing component selected from the group consisting of
from about 80 to about 100 percent by weight of a component derived from a natural, renewable component and
from about 0 to about 20 percent by weight of a component derived from a petrochemical source to total 100 percent by weight of active hydrogen containing component;
from about 0.5 to about 1 percent by weight of a catalyst;
from about 0.3 to about 3 percent by weight of a surfactant and
from about 0.5 to about 20 percent by weight of a blowing agent.

2. A low index polyurethane foam of claim 1, wherein the isocyanate is selected from the group consisting of aromatic di- and poly- isocyanates, aliphatic isocyanates, cycloaliphatic isocyanates, adducts of diisocyanates, isocyanate terminated prepolymers, quasi-prepolymer and mixtures thereof.

3. A low index polyurethane foam of claim 2, wherein the isocyanate is selected from the group consisting of toluene diisocyanate, isomers of toluene diisocyanate, methylene bis(phenyl isocyanate), isomers of methylene bis(phenyl isocyanate), poly(methylene) poly(phenyl) poly(isocyanate), carbodiimide-modified methylene bis(phenyl isocyanate), polymeric methylene bis(phenyl isocyanate) where the isocyanate functionality ranges from about 2.1 to about 3, paraphenylene diisocyanate, 1,5-naphthalene diisocyanate, hexamethylene diisocyanate, trimers of hexamethylene diisocyanate, isophorone diisocyanate, hydrogenated methylene bis(phenyl isocyanate), trimethylolpropane adduct of toluene diisocyanate, lysine diesterisocyanate, tall oil based isocyanates, and other isocyanates derived from natural sources and mixtures of the foregoing.

4. A low index polyurethane thermoset foam of claim 1, wherein said active hydrogen containing component is selected from the group consisting of ethylene glycol; triethylene glycol; glycerol; trimethylolpropane; dipropylene glycol; 1,4-butanediol; and 1,3-propanediol; hydroxyl terminated polyesters based on dibasic acids with carbon atoms ranging from C₄ to C₁₂ polycaprolactones; hydroxyl-terminated polycarbonates; glycerol; trimethylolpropane; 1,2,6-hexane triol; hydroxyl terminated polyethers and random and block copolymers thereof; poly(oxybutylene) glycols and polyols, in weight average molecular weights ranging from about 400 to about 6500; poly(oxyethylene),poly(oxypropylene) and, poly(oxyethylene) (oxypropylene) polyols based on base polyols selected from the group consisting of glycol, glycerol, pentaerythritol, sorbitol, mannitol, sucrose, glucose and other mono, -di- and polysaccharides; polyols based on mercaptans; C₁ to C₆ alkanolamines and polyoxyalkylene derivatives thereof; polyoxyalkylene derivatives of diamines and alkanolamines; hindered aromatic diamines having the formula 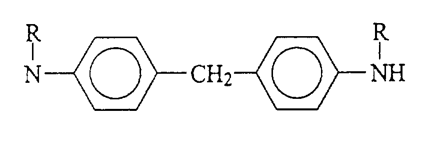 wherein R is C₄ to C₈ and mixtures thereof.

5. A low index polyurethane foam, as set forth in claim 1, wherein said component derived from a petrochemical source is selected from the group consisting of hydroxyl terminated polyesters based on dibasic acids with carbon atoms ranging from C₄ to C₁₂, polycaprolactones, hydroxyl terminated polycarbonates in molecular weights ranging from about 400 to about 6500, polyoxyethylene glycols, polyoxyethylene polyols, polyoxypropylene glycols, polyoxypropylene polyols, poly(oxyethylene) (oxypropylene) glycols, poly(oxyethylene)-(oxypropylene) polyols, poly(oxybutylene) glycols, poly(oxybutylene) polyols, dimercaptan polyols, ethylene glycol, diethylene glycol, triethylene glycol, glycerol polyols, trimethylolpropane, propylene glycol polyols, dipropylene glycol, 1,4-butanediol, 1,3-propanediol, polyols based on the foregoing, ethylene diamine, triethanolamine, toluene diamine, and mixtures thereof.

6. A low index polyurethane foam, as set forth in claim 1, wherein said component derived from a natural, renewable component is selected from the group consisting of a) mono-, di- and polysaccharides; b) hydroxyl-containing fatty oils having from about 12 to about 30 carbon atoms; c) renewable modified and unmodified natural additives selected from the group consisting of proteins, amino acids and amino add derivatives, cellulose and cellulose derivatives, rosin, tall oil, starch and starch derivatives and, mixtures of a, b and c.

7. A low index polyurethane foam, as set forth in claim 1, wherein the catalyst is selected from the group consisting of dibutyltin dilaurate, bismuth catalysts, a mixture of organo-zinc and bismuth catalysts, tertiary amine catalysts, quaternary ammonium carboxylate catalysts, sodium octoate, potassium octoate, potassium acetate, 2,4,6-tris(dimethylaminopropyl) hexahydrotriazine, 2,4,6-tris(dimethylamino) phenol, combinations of 2,4,6-tris(dimethylamino) phenol with potassium octoate, and a combinations of 2,4,6-tris(dimethylamino) phenol with potassium acetate.

8. A low index polyurethane foam, as set forth in claim 1, wherein the foam is an open celled thermoset foam capable of absorbing water.

9. A low index polyurethane foam, as set forth in claim 1, wherein the surfactant is selected from the group consisting of anionic surfactants, nonionic surfactants, cationic surfactants, and amphoteric surfactants.

10. A low index polyurethane foam, as set forth in claim 9, wherein the surfactant is selected from the group consisting of silicone containing surfactants, zinc stearate, block copolymers of polyoxyethylene and polyoxypropylene glycols, random copolymers of poly(oxyethylene) and poly(oxypropylene), derivatives of fatty acids, salts of alkyl aryl sulfonic acids, sulfosuccinates, imidazolines, derivatives of imidazoline, and mixtures thereof.

11. A low index polyurethane foam, as set forth in claim 1 further comprising from 0 to about 20 parts by weight, based upon the weight of the formulation, of an additive selected from the group consisting of peat moss, wood fibers, ground agricultural refuse, ground horticultural refuse, plant growth hormones, pH control agents, biocides, nutrients for plant growth, flower life prolonging agents, and mixtures thereof.
